# EUROPÄISCHE PATENTSCHRIFT

(11) **EP 3 492 823 B1**
(45) Veröffentlichungstag und Bekanntmachung des Hinweises auf die Patenterteilung: **21.04.2021**
(21) Anmeldenummer: 18209178.5
(22) Anmeldetag: 29.11.2018
(51) Int. Cl.: F24F 3/08, F24F 3/147, F24F 12/00, F24F 3/00, F24F 3/14

(54) **KLIMATISIERUNGSANLAGE UND VERFAHREN ZUM KONDITIONIEREN VON LUFT FÜR EIN GEBÄUDE**
AIR CONDITIONING DEVICE AND METHOD OF AIR CONDITIONING A BUILDING
DISPOSITIF ET PROCÉDÉ DE CONDITIONNEMENT D'UN BÂTIMENT

(30) Priorität: 01.12.2017 DE 102017128545
(43) Veröffentlichungstag der Anmeldung: 05.06.2019
(73) Patentinhaber: Staib, Thomas, 69493 Hirschberg (DE)
(72) Erfinder: Staib, Thomas, 69493 Hirschberg (DE)
(74) Vertreter: STT Sozietät Thews & Thews

(56) Entgegenhaltungen:
- WO-A1-02/093080
- US-A- 4 113 004
- US-B2- 6 675 601

## Beschreibung

Die Erfindung bezieht sich auf eine Klimatisierungsanlage für ein Gebäude mit mehreren dezentralen Nutzbereichen zum mittel- oder unmittelbaren Heizen, Kühlen, Befeuchten und Entfeuchten von Luft in allen Nutzbereichen. Die Klimatisierungsanlage umfasst einen zentralen Wärmeerzeuger und einen zentralen Kälteerzeuger zur zentralen Versorgung aller Nutzbereiche, jeweils einen sekundären Wärmetauscher für jeden dezentralen Nutzbereich zum dezentralen Heizen und Kühlen des Nutzbereichs. Ferner umfasst die Klimatisierungsanlage ein hydraulisches Rohrsystem mit einem ersten Rohrkreis als Vor- und Rücklaufverbindung zwischen dem Kälteerzeuger und dem sekundären Wärmetauscher und einem zweiten Rohrkreis als Vor- und Rücklaufverbindung zwischen dem Wärmeerzeuger und dem sekundären Wärmetauscher.

Zudem bezieht sich die Erfindung auf ein Verfahren zum Klimatisieren eines Gebäudes mit mehreren Nutzbereichen unter Einsatz einer Klimatisierungsanlage zum mittel- oder unmittelbaren Heizen, Kühlen, Befeuchten und Entfeuchten von Luft in allen Nutzbereichen, aufweisend einen zentralen Wärmeerzeuger und einen zentralen Kälteerzeuger zur zentralen Versorgung aller Nutzbereiche sowie jeweils einen sekundären Wärmetauscher für jeden dezentralen Nutzbereich zum dezentralen Heizen und Kühlen des Nutzbereichs und ein hydraulisches Rohrsystem mit einem ersten Rohrkreis als Vor- und Rücklaufverbindung zwischen dem Kälteerzeuger und dem sekundären Wärmetauscher und einem zweiten Rohrkreis als Vor- und Rücklaufverbindung zwischen dem Wärmeerzeuger und dem sekundären Wärmetauscher.

Zentralanlagen nach dem Stand der Technik zur Gebäudeklimatisierung zeichnen sich dadurch aus, dass sie in den von ihnen versorgten Nutzbereichen definierte Raumluftzustände herstellen. Hierzu wird den Nutzbereichen Luft, welche zentral gefiltert, gefördert, erwärmt oder gekühlt und befeuchtet oder entfeuchtet wurde, zugeführt und abgeführt. Solche zentralen Klimatisierungssysteme zeichnen sich ferner dadurch aus, dass die zentrale Aufbereitung mindestens die erforderliche hygienische Außenluftmenge gemäß den vorgenannten Behandlungsstufen zentral endkonditioniert und über ein Luftkanalsystem den Nutzbereichen zuführt. Das Luftkanalsystem, das die Zuluft im Sommer mit ca. +17°C und im Winter mit ca. +25°C zu den Nutzbereichen führt, muss deshalb isoliert werden.

Die US 4 113 004 A beschreibt ein zentrales Lüftungsgerät mit einem Rotations-Feuchtewärmetauscher und einem Rotationswärmetauscher und entsprechenden Zuluft- und Abluftkanälen.

Die US 6 675 601 B2 beschreibt ebenso ein zentrales Lüftungsgerät.

Die WO 02/093080 A1 beschreibt ein Klimatisierungssystem für ein Gebäude mit zentralen Wärme- und Kälteerzeuger die über einen Kaltwasser- und einen Warmwasserkreislauf mit dezentralen Wärmetauschern verbunden sind um dezentrale Nutzbereiche zu konditionieren.

Der Erfindung liegt die Aufgabe zugrunde, ein Klimatisierungssystem derart auszubilden und anzuordnen, dass die hydraulische Bemessung des Heiz- und Kühlkreises sowie die Medientemperaturen im Sommer und im Winter reduziert werden und gleichzeitig der Raumbedarf für die technischen Installationen des Systems im Gebäude vermindert wird.

Gelöst wird die Aufgabe erfindungsgemäß durch eine Klimatisierungsanlage mit den Merkmalen von Anspruch 1, sowie einem Verfahren zum Konditionieren von Luft mit den Merkmalen von Anspruch 10. Bevorzugte Ausführungsformen der Erfindung sind in den Unteransprüchen definiert. Gemäß der Erfindung ist vorgesehen, dass ein zentrales Lüftungsgerät über dezentrale Luftkanäle für Zuluft und für Abluft mit jedem Nutzbereich verbunden ist, das zentrale Lüftungsgerät einen Rotations-Feuchte- und Wärmetauscher und einen Rotationswärmetauscher aufweist, wobei der zentrale Zuluftstrom im Lüftungsgerät durch den zentralen Abluftstrom im Lüftungsgerät ausschließlich passiv konditionierbar ist, wobei das zentrale Lüftungsgerät einen mit dem Kondensator des Kälteerzeugers hydraulisch gekoppelten Regenerationswärmetauscher aufweist und der Regenerationswärmetauscher mit einem Nachwärmetauscher hydraulisch gekoppelt ist, wobei der Nachwärmetauscher hydraulisch mit dem Wärmeerzeuger gekoppelt ist, wobei der Regenerationswärmetauscher im Luftkanal für Abluft stromauf des Rotations-Feuchte- und Wärmetauschers stromab des Rotationswärmetauschers angeordnet ist, wodurch der Regenerationswärmetauscher einen Abluftstrom entsprechend der Entfeuchtungslast erwärmt und dadurch die im Rotations-Feuchte- und Wärmetauscher eingelagerte Feuchtigkeit austreibt.

Die passive Konditionierung eines zentralen Zuluftstroms und eines zentralen Abluftstroms wird dadurch erreicht, dass im zentralen Lüftungsgerät ein Rotations-Feuchte- und Wärmetauscher und ein Rotationswärmetauscher verwendet werden. Diese gewinnen Temperatur und Feuchte aus der Abluft mit einem hohen Wirkungsgrad zurück und führen sie der Zuluft zu. Passiv deshalb, weil dem Zuluftstrom nicht aktiv mittels eines Kälte- oder Wärmeerzeugers, sondern nur durch Überschüsse aus der Abluft zentral konditioniert wird, die der Abluftstrom aus den Nutzungsbereichen mitführt. Die Vortemperierung der Zuluft erfolgt zentral ausschließlich durch Wärmerückgewinnung aus der Zuluft. Entsprechend erfolgt die Feuchtebehandlung der Zuluft zentral ausschließlich durch Feuchterückgewinnung aus der Zuluft.

Die passive Konditionierung bringt den Vorteil, dass das zentrale Lüftungsgerät auf wesentliche Komponenten beschränkt wird und energetisch günstig arbeitet. Ferner ist es möglich auf eine Isolation, insbesondere der dezentralen Luftkanäle, zu verzichten, denn es wird die schon im Gebäude befindliche Wärmeenergie dahingehend genutzt, dass sie der weiteren Vorkonditionierung der Zuluft dient. Durch die räumlich getrennte Zuluftkonditionierung liegen die Austrittstemperaturen des Zuluftstroms aus dem zentralen Lüftungsgerät zwischen +16°C im Winter und +31 °C im Sommer. Die dezentralen Luftkanäle verlaufen in den sogenannten Infrabereichen des Gebäudes. Die entsprechenden Temperaturen in den Infrabereichen klimatisierter Gebäude liegen zwischen +18°C im Winter und +30°C im Sommer. Durch diese Temperaturverhältnisse zwischen dem teilkonditionierten Zuluftstrom und den Infrabereichen des Gebäudes findet ein vorteilhafter Energieaustausch statt. Da eine Wärmedämmung diesem energetischen Vorteil entgegenwirken würde, wird darauf verzichtet.

Die beiden Rotationstauscher besitzen im Sommer die Eigenschaft, unter Zuführung von Wärme und durch Beschichtung eines Rotors mit einem stark feuchtigkeitsaffinen Material, die Außenluft zu trocknen, wobei die prozessbedingte Erwärmung der Zuluft durch den zweiten Rotor abgeführt wird. Nach dem Trocknungsprozess steht die Zuluft getrocknet und mit näherungsweise Außentemperatur zur Verfügung. Die benötigte Wärmeenergie wird vorwiegend oder gesamt durch Abwärme aus dem Kälteprozess gedeckt. Die Kältemaschinengröße reduziert sich dadurch um die Entfeuchtungsleistung, welche bei der Lufttrocknung mit einem Luftkühler erforderlich wäre.

Bei maximaler Entfeuchtungslast kann durch Erhöhung der Kondensationstemperatur im Kälteerzeuger oder durch den Nachwärmaustauscher, der aus dem Wärmeerzeuger gespeist wird, die Austrittstemperatur aus dem Regenerationswärmetauscher erhöht werden und dem Trocknungsprozess des Rotations-Feuchte- und Wärmetauschers zugeführt werden. Welche Form der Zusatzheizleistung verwendet wird, entscheidet die Verfügbarkeit bzw. die Wirtschaftlichkeit. Ein Kondensat-Ableitsystem ist aufgrund der sorptiven Lufttrocknung nicht erforderlich. Im zentralen Lüftungsgerät befinden sich außerdem noch übliche Komponenten zur Filterung, zum Transport und zur Schallreduzierung. Im zentralen Lüftungsgerät wird die dem Gebäude zugeführte Zuluft durch die Wärme- und Feuchterückgewinnung passiv vortemperiert bzw. passiv be- oder entfeuchtet. Ein Luftkühler bzw. ein Lufterhitzer und die zugehörige Hydraulik ist nicht vorgesehen. Über die im Lüftungsgerät vorgesehene Konditionierung der Zuluft mit Teilerwärmung und Be- oder Entfeuchtung hinaus findet keine weitere zentrale Luftbehandlung statt. Die thermische Endbehandlung, Erwärmung oder Kühlung der in einem Luftkanal geführten Zuluft, erfolgt aktiv in jedem Nutzungsbereich.

Die Kopplung erfolgt über einen Kopplungskreis, der insbesondere hydraulisch sein kann. Die Größe der Kältemaschine reduziert sich somit, da kein separater Luftkühler erforderlich ist und auf ein Kondensat-Ablaufsystem verzichtet werden kann. Ferner kann der Abluft Wärmeenergie zugeführt werden, was insbesondere den Wirkungsgrad des Rotations-Feuchte- und Wärmetauschers optimieren kann.

Weiterhin wird die Aufgabe dadurch gelöst, dass ein zentrales Lüftungsgerät über Luftkanäle mit jedem Nutzbereich verbunden ist, das einen Rotations-Feuchte- und Wärmetauscher und einen Rotationswärmetauscher aufweist, die einerseits einen zentralen Zuluftstrom für die Nutzbereiche zentral vorkonditionieren und andererseits dem Abluftstrom aus den Nutzbereichen Wärmeenergie und Feuchtigkeit für die Vorkonditionierung der Zuluft entziehen.

Der energetische Vorteil durch den erst im Nutzungsbereich endtemperierten oder endkonditionierten Zuluftstrom ergibt sich in den bivalenten Betriebsfällen, bei denen im Gebäude sowohl geheizt als auch gekühlt werden muss. In diesen Betriebsfällen besitzt der zentral teilkonditionierte Zuluftstrom, welcher mit den Rotationswärmetauschern auf die aktuell dominante Gebäudelast konditioniert wird, für den gegenläufigen Lastfall eine vorteilhafte Teillastbehandlung. Besonders in glasdominierten Gebäuden ist dieser bivalente Betriebsfall zeitlich sehr ausgeprägt.

Ferner ist erfindungsgemäß vorgesehen, dass der Regenerationswärmetauscher mit einem Nachwärmetauscher hydraulisch gekoppelt ist, wobei der Nachwärmetauscher hydraulisch mit dem zentralen Wärmeerzeuger gekoppelt ist. Die Kopplung erfolgt jeweils über einen weiteren Kopplungskreis.

Vorteilhaft kann es auch sein, wenn für jeden Nutzbereich ein primärer Luft-Wasser-Wärmetauscher vorgesehen ist, der die im Lüftungsgerät passiv vorkonditionierte Raumluft jeweils im dezentralen Nutzbereich aktiv endkonditioniert, wobei der primäre Luft-Wasser-Wärmetauscher sowohl mit dem ersten Rohrkreis als auch mit dem zweiten Rohrkreis hydraulisch gekoppelt ist.

Hierdurch wird erreicht, dass die Zuluft in dem jeweiligen Nutzbereich individuell endkonditioniert werden kann. Aktiv bedeutet unter Einsatz von Kälte- und Wärmeerzeugern, die über ein hydraulisches System mit Wärmetauschern in den Nutzungsbereichen gekoppelt sind. Dies bringt insbesondere dann energetische Vorteile, wenn in einem Teil der Nutzbereiche geheizt und in einem anderen Teil der Nutzbereiche gekühlt wird, da dann die zentrale Luft so vorkonditioniert werden kann, dass die für die Endkonditionierung in beiden Bereichen benötigte Energie minimiert ist. Weiterhin können auch die Betriebskosten insbesondere direkt im Nutzbereich erfasst werden.

Vorteilhaft ist es auch, wenn bei großen Heiz- oder Kühllasten die jeweiligen großen Medienmengen von Heizwasser oder Kühlwasser auf beide Rohrkreise aufgeteilt den Nutzungsbereichen zugeführt werden und die jeweils nicht benötigte Medienart abgeschaltet wird, wobei die Dimensionierung der beiden Rohrkreise auf jeweils 50% der Maximal-Medienmenge erfolgt.

Dabei kann es vorteilhafterweise vorgesehen sein, dass der primäre Luft-Wasser-Wärmetauscher sowohl über den ersten Rohrkreis als auch über den zweiten Rohrkreis hydraulisch und in Reihe mit dem sekundären Wärmetauscher gekoppelt ist. In Zuflussrichtung ist zunächst der primäre Luft-Wasser-Wärmetauscher und dann der sekundäre Wärmetauscher vorgesehen. Auf diese Weise wird der primäre Luft-Wasser-Wärmetauscher mit dem Kälteerzeuger oder dem Wärmeerzeuger gekoppelt. So kann Rohrmaterial und Energie eingespart werden, denn insbesondere eine zweite Klimatisierungsanlage ist nicht nötig. Zudem ist dadurch ein erhöhtes Leistungsvermögen beziehungsweise eine geringere Baugröße möglich.

Von besonderer Bedeutung kann für die vorliegende Erfindung sein, wenn eine zentrale Schalthydraulik vorgesehen ist, die den ersten Rohrkreis mit dem zweiter Rohrkreis derart schaltbar verbindet, dass der erste Rohrkreis in seiner hydraulischen Kapazität ab der zentralen Schalthydraulik bis zu 100 % von dem Kälteerzeuger trennbar und bis zu 100 % mit dem Wärmeerzeuger koppelbar ist oder der zweiter Rohrkreis in seiner hydraulischen Kapazität ab der zentralen Schalthydraulik bis zu 100 % vom Wärmeerzeuger trennbar und bis zu 100 % mit dem Kälteerzeuger koppelbar ist. Bei gleichzeitigem Auftreten von Heiz- und Kühllasten in unterschiedlichen Nutzbereichen im Gebäude während der Übergangszeiten wird je ein Rohrkreis mit Heizmedium und ein Rohrkreis mit Kühlmedium beaufschlagt. In diesem bivalenten Betriebsfall mit einkreisiger Durchströmung sind etwa 60% der Komponenten-Nennleistungen verfügbar. Bei Verwendung einer Wärmepumpe kann im bivalenten Betriebsfall die sogenannte Wärmeverschiebung innerhalb des Gebäudes genutzt werden. Im Sommer oder auch im Winter, wenn für das gesamte Gebäude nur ein Lastfall vorliegt, werden beide Rohrkreise mit Kühlmedium oder Heizmedium beaufschlagt. Da die Maximalleistungen im Parallelbetrieb mit gleichen Medientemperaturen erreicht werden, kann die Rohrdimensionierung auf jeweils 50% des maximal erforderlichen Massenstroms erfolgen. Durch die parallele, gleichartige Durchströmung erhöht sich die Leistung der Sekundärwärmetauscher. Dies ermöglicht eine kleinere Bauweise. Dadurch ist es möglich, die Rohre für die Rohrkreise mit einem dünnen Durchmesser auszulegen. Somit werden sie günstiger und sind leichter zu verlegen.

Im Zusammenhang mit der erfindungsgemäßen Ausbildung und Anordnung kann es von Vorteil sein, wenn die Durchströmungsrichtung in jedem der beiden Rohrkreise zumindest teilweise im Bereich zwischen der zentralen Schalthydraulik und dem jeweiligen Nutzbereich umkehrbar ist. Damit können die beiden Rohrkreise des primären Luft-Wasser-Wärmetauschers und des sekundären Wärmetauschers in beliebiger Reihenfolge durchströmt werden.

Vorteilhaft kann es ferner sein, wenn der primäre Luft-Wasser-Wärmetauscher und der sekundäre Wärmetauscher jeweils gemeinsam über nur ein Regelventil im ersten Rohrkreis und jeweils gemeinsam über nur ein Regelventil im zweiten Rohrkreis regelbar sind. Da jeweils nur ein Regelventil vorgesehen ist, lassen sich die Investitionskosten minimieren.

Außerdem kann es vorteilhaft sein, wenn die Rotationstauscher eckige Gehäuse aufweisen, deren Strömungsquerschnitt größer ist als die aktive runde Fläche eines Rotors der Rotationstauscher und dass die zwischen dem Rotor und dem Gehäuse gebildeten Strömungskanäle durch eine oder mehrere motorisch angetriebene Eckklappen geöffnet oder geschlossen werden können. Durch das Öffnen der Eckklappen reduziert sich der Druckverlust an dieser Komponente, insbesondere in dem Fall, in dem der Rotor nicht aktiv ist. Damit lassen sich geringe elektrische Leistungsaufnahmen der Ventilatoren erreichen, weil die nicht aktiven Rotoren im zentralen Klimatisierungsgerät durch die Lüftungsklappen umfahren werden, wodurch deren Druckverlust reduziert wird.

Durch die stetig verstellbaren Eckklappen neben dem jeweiligen Rotor des Rotations-Feuchte- und Wärmetauschers und des Rotationswärmetauschers kann die Leistungsaufnahme der Rotoren variiert werden. Dies ist insbesondere für die veränderlichen Erfordernisse der Luftentfeuchtung und für die wechselnde Wärmeabfuhr des variablen Kälteerzeugungsprozesses vorteilhaft.

Ferner kann es vorteilhaft sein, wenn für jeden Nutzbereich mindestens ein Heizkörper vorgesehen ist, der in dem Vorlauf des zweiten Rohrkreises vor den primären Luft-Wasser-Wärmetauscher und vor den sekundären Wärmetauscher geschaltet ist. Damit lassen sich der Wirkungsgrad des Wärmeerzeugers und der Komfort in den Nutzungsbereichen erhöhen.

Zur Erhöhung der Heizkörpereffizienz kann durch zwei weitere Motorklappen und eine Verbindungsleitung der Rücklauf des zweiten Heizkreises direkt auf den Vorlauf des ersten Heizkreises geschaltet werden. Dadurch kann das für niedere Vorlauftemperaturen konzipierte System auch für höhere Vorlauftemperaturen von beispielsweise 45°C bis 65°C für den Heizkörper genutzt werden, wodurch sich die für das menschliche Wohlbefinden förderliche Strahlungswärmeabgabe des Heizkörpers wesentlich erhöht. Vorteilhaft ist es in diesem Zusammenhang, dass durch die Verbindungsleitung der primäre und der se-Außerdem kann es von Vorteil sein, wenn zentral am oder im Lüftungsgerät Ventilatoren zur Förderung des Zuluftstroms und des Abluftstroms sowie dezentral in den Luftkanälen Schubventilatoren für ungünstige Versorgungsbereiche vorgesehen sind. Es gibt Anwendungsfälle, in denen der externe Gesamtdruck der Ventilatoren wegen einzelner Versorgungsbereiche aufgrund örtlicher Lage oder sekundärer Luftbehandlung mit erhöhtem Druck betrieben werden muss. Durch Verwendung von dezentralen Schubventilatoren in dem entsprechenden Gebäudeteil können diese Teilluftmengen mit geringem Energieaufwand bedarfsgerecht versorgt werden. Dies wird dadurch erreicht, dass je Versorgungsbereich und Luftart ein Schubventilator in den jeweiligen Luftkanal eingefügt wird. Dieser fördert nur noch die benötigte Teilluftmenge und erhöht diesen um den erforderlichen Differenzdruck. Für den Funktionsausfall des Schubventilators oder für lüftungsbedingte Teillasten ist eine parallel angeordnete Luftklappe vorgesehen, welche selbsttätig oder motorisch betrieben wird. Dabei kann ein System bestehend aus einem Gebäude und einer Klimatisierungsanlage wie beschrieben vorteilhaft sein.

Gemäß einem weiteren Aspekt der Erfindung wird ein Verfahren zur Konditionierung von Luft in einem Nutzbereich mit einer Klimatisierungsanlage vorgeschlagen.

Erfindungsgemäß ist weiter vorgesehen, dass das zentrale Lüftungsgerät einen mit dem Kondensator des Kälteerzeugers hydraulisch gekoppelten Regenerationswärmetauscher aufweist und der Regenerationswärmetauscher über einen hydraulischen Kopplungskreis mit einem Nachwärmetauscher gekoppelt ist, wobei der Nachwärmetauscher hydraulisch mit dem zentralen Wärmeerzeuger gekoppelt ist, wodurch der Regenerationswärmetauscher den Abluftstrom entsprechend der Entfeuchtungslast erwärmt und dadurch die im Rotations-Feuchte- und Wärmetauscher eingelagerte Feuchtigkeit austreibt. Auf diese Weise wird der Wirkungsgrad des Rotations-Feuchte- und Wärmetauschers optimiert.

Letztlich kann es von Vorteil sein, wenn in den Nutzbereichen jeweils ein primärer Luft-Wasser-Wärmetauscher vorgesehen ist, der den vorkonditionierten zentralen Zuluftstrom für den jeweiligen Nutzbereich nach Bedarf zur Nutzbereichszuluft thermisch endkonditioniert, wobei der primäre Luft-Wasser-Wärmetauscher mit einem ersten hydraulischen Rohrkreis und einem davon getrennten zweiten hydraulischen Rohrkreis gekoppelt und über jeden der beiden Rohrkreise jeweils in Reihe mit dem sekundären Wärmetauscher geschaltet im Nutzbereich angeordnet ist. Dies erhöht den Wirkungsgrad des Verfahrens in Bezug auf die Klimatisierung des Nutzbereichs.

Weitere Vorteile und Einzelheiten der Erfindung sind in den Patentansprüchen und in der Beschreibung erläutert und in den Figuren dargestellt. Es zeigt:
- Figur 1: einen schematischen Schaltplan mit einem Nutzbereich;
- Figur 2: eine Prinzipskizze eines Rotationstauschers in einer Ansicht in axialer Richtung;
- Figur 3: eine Prinzipskizze eines primären Luft-Wasser-Wärmetauschers innerhalb des dezentralen Zuluftkanals.

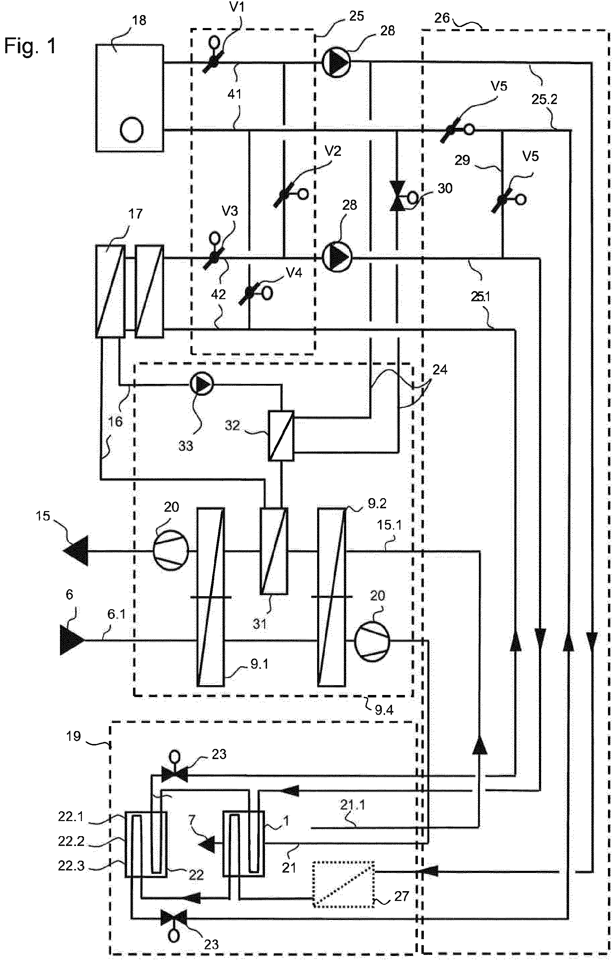

Nach Figur 1 umfasst die Klimatisierungsanalage einen Wärmeerzeuger 18 mit einem Zu- bzw. Ablauf 41, einen Kälteerzeuger 17 mit einem Zu- bzw. Ablauf 42 und ein zentrales Lüftungsgerät 8 mit einem zentralen Abluftkanal 15.1 und einem zentralen Zuluftkanal 6.1.

Das zentrale Lüftungsgerät 8 wird über den zentralen Zuluftkanal 6.1 mit einem zentralen Zuluftstrom 6 von außerhalb des Gebäudes gespeist. Dieser durchströmt zunächst einen Rotations-Feuchte- und Wärmetauscher 9.1 und dann einen Rotationswärmetauscher 9.2, bevor er aus dem zentralen Lüftungsgerät 8 in einen dezentralen Zuluftkanal 21 geführt wird. Demgegenüber durchläuft ein dem Lüftungsgerät 8 aus einem dezentralen Abluftkanal 21.1 zugeführter zentraler Abluftstrom 15 im zentralen Abluftkanal 15.1 zunächst den Rotationswärmetauscher 9.2, dann einen Regenerationswärmetauscher 31 und im Folgenden den Rotations-Feuchte- und Wärmetauscher 9.1, bevor der Abluftstrom 15 das Gebäude verlässt. Mithilfe von Ventilatoren 20 im zentralen Zuluftkanal 6.1 und im zentralen Abluftkanal 15.1 wird der jeweilige Luftstrom 6, 15 gefördert. In diesem Ausführungsbeispiel ist ein Ventilator 20 im zentralen Zuluftkanal 6.1 stromauf des Rotationswärmetauschers 9.2 und ein Ventilator 20 stromab des Rotationswärmetauschers 9.2 im zentralen Abluftkanal 15.1 angeordnet.

Über den Rotations-Feuchte- und Wärmetauscher 9.1 und den Rotationswärmetauscher 9.2 wird der zentrale Zuluftstrom 6 passiv vorkonditioniert, wobei die enthaltene Wärme und Feuchte des zentralen Abluftstroms 15 genutzt wird. Ferner umfasst das zentrale Lüftungsgerät 8 einen Nachwärmetauscher 32. Der Regenerationswärmetauscher 31 und der Nachwärmetauscher 32 sind über einen ersten hydraulischen Kopplungskreis 16, der über eine Pumpe 33 angetrieben wird, in Reihe mit dem Kälteerzeuger 17 gekoppelt. Der Nachwärmetauscher 32 ist über einen zweiten hydraulischen Kopplungskreis 24 an den zweiter Rohrkreis 25.2 angeschlossen und dadurch mit dem Wärmeerzeuger 18 hydraulisch gekoppelt. Der Nachwärmetauscher 32 lässt sich über ein motorbetriebenes Absperrventil 30 deaktivieren. Mit dem zweiten hydraulischen Kopplungskreis 24 ist es möglich, aktiv den zentralen Abluftstrom 15 zu konditionieren und insbesondere den Wirkungsgrad des Rotations-Feuchte- und Wärmetauschers 9.1 zu optimieren.

Sämtliche bisher beschriebenen Komponenten sind zentral in einem Gebäude, abseits der dezentralen Nutzbereiche positioniert, für deren Klimatisierung sie dienen, von denen ein dezentraler Nutzbereich 19 beispielhaft dargestellt ist. Für die aktive Endkonditionierung des Zuluftstroms 6 sind im dezentralen Nutzbereich 19 ein primärer Luft-Wasser-Wärmetauscher 1, ein sekundärer Wärmetauscher 22 und optional ein Heizkörper 27 vorgesehen.

Der zentrale Zuluftkanal 6.1 verzweigt dezentral in mehrere dezentrale Zuluftkanäle 21, durch die der vorkonditionierte Zuluftstrom 6 in den jeweiligen dezentralen Nutzbereich 19 geführt wird. Entsprechend münden alle dezentralen Abluftkanäle 21.1 aus den dezentralen Nutzbereichen 19 im zentralen Abluftkanal 15.1. Die Zu- und Abluftkanäle 6.1, 21, 21.1, 15.1 sind in einem sogenannten Infrabereich 26 des Gebäudes verlegt, das heißt in einem Bereich, der nicht klimatisiert wird, jedoch im Wärmetausch mit den Luftkanälen steht. Durch vorstehend erörterte Temperaturverhältnisse zwischen dem teilkonditionierten zentralen Zuluftstrom 6 und den Infrabereichen 26 des Gebäudes findet ein vorteilhafter Energieaustausch statt. Da eine Wärmedämmung diesem energetischen Vorteil entgegenwirken würde, wird darauf verzichtet.

Der primäre Luft-Wasser-Wärmetauscher 1 ist über einen ersten Rohrkreis 25.1, mithilfe dessen ein Infrabereich 26 des Gebäudes überwunden wird, mit dem Zu- bzw. Ablauf 42 des Kälteerzeugers 17 gekoppelt und über einen zweiten Rohrkreis 25.2, der ebenso durch den Infrabereich 26 des Gebäudes geführt ist, mit dem Zu- bzw. Ablauf 41 des Wärmeerzeugers 18 gekoppelt. In jedem der beiden Rohrkreise 25.1, 25.2 ist eine regelbare Pumpe 28 zum Umwälzen vorgesehen. Ferner wird er über einen dezentralen Zuluftkanal 21, der mit dem zentralen Zuluftkanal 6.1 gekoppelt ist, mit dem vorkonditionierten zentralen Zuluftstrom 6 versorgt. Mithilfe der durch beide Rohrkreise 25.1, 25.2 von den Erzeugern 17, 18 eingebrachten Wärmetauschmedien und insbesondere ihrer Temperaturwerte wird die Nutzbereichszuluft 7 aktiv endkonditioniert.

Der sekundäre Wärmetauscher 22, etwa ein Ventilatorkonvektor 22.2 oder ein Induktionsgerät 22.3, ist über die Rohrkreise 25.1, 25.2 mit den beiden Erzeugern Kälteerzeuger 17 und Wärmeerzeuger 18 gekoppelt. Der sekundäre Wärmetauscher 22 ist in Zulaufrichtung der Wärmetauschmedien in den Rohrkreisen 25.1, 25.2 stromab des primären Luft-Wasser-Wärmetauschers 1 platziert. Der Heizkörper 27 ist ausschließlich mit dem zweiten Rohrkreis 25.2 gekoppelt und in Zulaufrichtung stromauf des primären Luft-Wasser-Wärmetauschers 1 platziert. Beide Rohrkreise 25.1, 25.2 verfügen jeweils über ein Regelventil 23. Im Nutzbereich 19 befindet sich weiterhin ein dezentraler Abluftkanal 21.1, der mit dem zentralen Abluftkanal 15 gekoppelt ist und den zentralen Abluftstrom 15 aus dem Nutzbereich 19 in diesen einbringt. Die Vorlauftemperatur steigt mit einem Heizkörper 27 im Rohrkreis von +32°C bis auf +50°C, gleitend zur Außentemperatur. Bei dieser Variante werden zuerst der Heizkörper 27 und dann der primäre Luft-Wasser-Wärmetauscher 1 und der sekundäre Wärmetauscher 22 hydraulisch vor- oder nachgeschaltet und ebenfalls mit nur einem Regelventil 23 geregelt. Die Variante mit Heizkörpern 27 ist mit allen Arten von sekundären Wärmetauschern kombinierbar. In Nutzungsfällen, bei denen die Gefahr von Kondensatbildung an den Heizkörpern 27 besteht, kann der Heizkörper 27 im Sommer mit einem Umschaltventil hydraulisch umfahren werden.

Zwischen den Zu- und Abläufen 41, 42 der Erzeuger und den Rohrkreisen 25.1, 25.2 ist eine zentrale Schalthydraulik 25 vorgesehen. Die Schalthydraulik 25 umfasst insbesondere vier schaltbare Ventile V1, V2, V3 und V4. Durch entsprechende Schaltung der Ventile V1, V2, V3 und V4 ist es in Fällen maximaler Heiz- oder Kühllast möglich, in beide Rohrkreise 25.1, 25.2 vollständig entweder nur von dem Wärmeerzeuger 18 konditioniertes Wärmetauschmedium, nur von dem Kälteerzeuger 17 konditioniertes Wärmetauschmedium oder in den zweiten Rohrkreis 25.2 durch den Wärmeerzeuger 18 konditioniertes Wärmetauschmedium und in den ersten Rohrkreis 25.2 durch den Kälteerzeuger 17 konditioniertes Wärmetauschmedium einzubringen.

Eine Erweiterung des Systems nach Fig. 1 ist möglich, indem zwei weitere motorbetriebene und schaltbare Ventile V5 sowie eine Verbindungsleitung zwischen den Rohrkreisen 25.1 und 25.2 vorgesehen sind. Ein erstens Ventil V5 ist hierbei im Rücklauf des Rohrkreises 25.2 und ein zweites Ventile V5 in der Verbindungsleitung 29 zwischen dem Rücklauf des Rohrkreises 25.2 und dem Vorlauf des Rohrkreises 25.1 vorgesehen. Durch die beiden Ventile V5 wird es im Zusammenspiel mit der zentralen Schalthydraulik möglich, den Rücklauf des Heizkreises des Rohrkreises 25.2 direkt auf den Vorlauf des Rohrkreises 25.1 zu schalten. Dadurch kann das für niedere Vorlauftemperaturen konzipierte System auch für höhere Vorlauftemperaturen in dem Heizkörper 27 genutzt werden, wodurch sich die für das menschliche Wohlbefinden förderliche Strahlungswärmeabgabe des Heizkörpers 27 wesentlich erhöht. Abgesehen davon ist es durch diese Anordnung möglich, die Rohrkreise 25.1 und 25.2 nicht parallel, sondern zumindest teilweise in Reihe zu schalten.

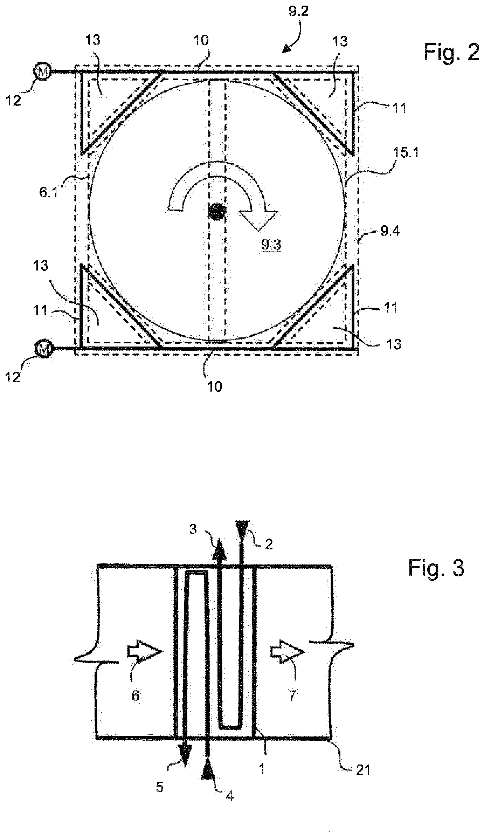

In Figur 2 ist der Rotationswärmetauscher 9.2 im Detail dargestellt. In dem rechteckigen bzw. quadratischen Gehäuse 9.4 ist mittig ein Rotor 9.3 in Kreisscheibenform angeordnet, dessen Durchmesser der Summe den Breiten des zentralen Zuluftkanals 6.1 und des zentralen Abluftkanals 15.1 entspricht, wobei die beiden Kanäle 6.1, 15.1 einen rechteckförmigen Querschnitt aufweisen. In den von dem Rotor 9.3 nicht abgedeckten Ecken des Gehäuses befinden sich jeweils Eckklappen 11. Ferner sind die Eckklappen 11 jeweils über eine Welle 10 mit einem Motor 12 gekoppelt. Die Motoren 12 ermöglichen es, die Eccklappen 11 zu schwenken, sodass Strömungskanäle 13 als Bypass freigeben sind. Dabei wird der Strömungsquerschnitt des jeweiligen Kanals 6.1, 15.1 vergrößert, was den Druckverlust des jeweiligen Kanals 6.1, 15.1 für den Fall minimiert, dass der Rotationswärmetauscher 9.2 nicht in Betrieb ist.

Eine der wesentlichen Komponenten in dem Zentralschema nach Figur 1 ist der primäre Luft-Wasser-Wärmetauscher 1. Dieser ist im Detail in Figur 3 dargestellt. Der Luft-Wasser-Wärmetauscher 1 ist im dezentralen Zuluftkanal 21 platziert. Durch den Luft-Wasser-Wärmetauscher 1 verläuft sowohl der erste Rohrkreis 25.1 mit seinem Vorlauf 2 und seinem Rücklauf 3 als auch der zweite Rohrkreis 25.2 mit seinem Vorlauf 4 und seinem Rücklauf 5. Beide Rohrkreise 25.1, 25.2 bringen den entsprechenden Temperaturwert des jeweiligen Wärmetauschmediums ein. Auf diese Weise wird der vorkonditionierte zentrale Zuluftstrom 6 als Nutzbereichszuluft 7 endkonditioniert.

## Patentansprüche

1. Klimatisierungsanlage für ein Gebäude mit mehreren dezentralen Nutzbereichen (19) zum mittel- oder unmittelbaren Heizen, Kühlen, Befeuchten und Entfeuchten von Luft in allen Nutzbereichen (19), aufweisend einen zentralen Wärmeerzeuger (18) und einen zentralen Kälteerzeuger (17) zur zentralen Versorgung aller Nutzbereiche (19), jeweils einen sekundären Wärmetauscher (22) für jeden dezentralen Nutzbereich (19) zum dezentralen Heizen und Kühlen des Nutzbereichs (19), ein hydraulisches Rohrsystem mit einem ersten Rohrkreis (25.1) als Vor- und Rücklaufverbindung zwischen dem Kälteerzeuger (17) und dem sekundären Wärmetauscher (22) und einem zweiten Rohrkreis (25.2) als Vor- und Rücklaufverbindung zwischen dem Wärmeerzeuger (18) und dem sekundären Wärmetauscher (22),
**dadurch gekennzeichnet, dass** ein zentrales Lüftungsgerät (8) über dezentrale Luftkanäle für Zuluft (21) und für Abluft (21.1) mit jedem Nutzbereich (19) verbunden ist, das zentrale Lüftungsgerät (8) einen Rotations-Feuchte- und Wärmetauscher (9.1) und einen Rotationswärmetauscher (9.2) aufweist, wobei der zentrale Zuluftstrom (6) im Lüftungsgerät (8) durch den zentralen Abluftstrom (15) im Lüftungsgerät (8) ausschließlich passiv konditionierbar ist, wobei das zentrale Lüftungsgerät (8) einen mit dem Kondensator des Kälteerzeugers (17) hydraulisch gekoppelten Regenerationswärmetauscher (31) aufweist und der Regenerationswärmetauscher (31) mit einem Nachwärmetauscher (32) hydraulisch gekoppelt ist, wobei der Nachwärmetauscher (32) hydraulisch mit dem Wärmeerzeuger (18) gekoppelt ist, wobei der Regenerationswärmetauscher (31) im Luftkanal für Abluft (21.1) stromauf des Rotations-Feuchte- und Wärmetauschers (9.1) und stromab des Rotationswärmetauschers (9.2) angeordnet ist, wodurch der Regenerationswärmetauscher (31) einen Abluftstrom (15) entsprechend der Entfeuchtungslast erwärmt und dadurch die im Rotations-Feuchte- und Wärmetauscher (9.1) eingelagerte Feuchtigkeit austreibt.

2. Klimatisierungsanlage nach Anspruch 1,
**dadurch gekennzeichnet,**
**dass** für jeden Nutzbereich (19) ein primärer Luft-Wasser-Wärmetauscher (1) vorgesehen ist, der die im Lüftungsgerät (8) passiv vorkonditionierte Raumluft jeweils im dezentralen Nutzbereich (19) aktiv endkonditioniert, wobei der primäre Luft-Wasser-Wärmetauscher (1) sowohl mit dem ersten Rohrkreis (25.1) als auch mit dem zweiten Rohrkreis (25.2) hydraulisch gekoppelt ist.

3. Klimatisierungsanlage nach Anspruch 2,
**dadurch gekennzeichnet,**
**dass** der primäre Luft-Wasser-Wärmetauscher (1) sowohl über den ersten Rohrkreis (25.1) als auch über den zweiten Rohrkreis (25.2) hydraulisch und in Reihe mit dem sekundären Wärmetauscher (22) gekoppelt ist.

4. Klimatisierungsanlage nach einem der vorhergehenden Ansprüche,
**dadurch gekennzeichnet,**
**dass** eine zentrale Schalthydraulik (25) vorgesehen ist, die den ersten Rohrkreis (25.1) mit dem zweiten Rohrkreis (25.2) derart schaltbar verbindet, dass der erste Rohrkreis (25.1) in seiner hydraulischen Kapazität ab der zentralen Schalthydraulik (25) bis zu 100 % von dem Kälteerzeuger (17) trennbar und bis zu 100 % mit dem Wärmeerzeuger (18) koppelbar ist oder der zweite Rohrkreis (25.2) in seiner hydraulischen Kapazität ab der zentralen Schalthydraulik (25) bis zu 100 % vom Wärmeerzeuger (18) trennbar und bis zu 100 % mit dem Kälteerzeuger (17) koppelbar ist.

5. Klimatisierungsanlage nach Anspruch 4,
**dadurch gekennzeichnet,**
**dass** die Durchströmungsrichtung in jedem der beiden Rohrkreise (25.1, 25.2) zumindest teilweise im Bereich zwischen der zentralen Schalthydraulik (25) und dem jeweiligen Nutzbereich (19) umkehrbar ist.

6. Klimatisierungsanlage nach einem der Ansprüche 2 bis 5,
**dadurch gekennzeichnet,**
**dass** der primäre Luft-Wasser-Wärmetauscher (1) und der sekundäre Wärmetauscher (22) jeweils gemeinsam über nur ein Regelventil (23) im ersten Rohrkreis (25.1) und jeweils gemeinsam über nur ein Regelventil (23) im zweiten Rohrkreis (25.2) regelbar sind.

7. Klimatisierungsanlage nach einem der vorhergehenden Ansprüche,
**dadurch gekennzeichnet,**
**dass** die Rotationstauscher (9.1, 9.2) eckige Gehäuse aufweisen, deren Strömungsquerschnitt größer ist als die aktive runde Fläche eines Rotors (9.3) der Rotationstauscher (9.1, 9.2) und dass die zwischen dem Rotor (9.3) und dem Gehäuse gebildeten Strömungskanäle (13) durch eine oder mehrere motorisch angetriebene Eckklappen (11) geöffnet oder geschlossen werden können.

8. Klimatisierungsanlage nach einem der vorhergehenden Ansprüche,
**dadurch gekennzeichnet,**
**dass** für jeden Nutzbereich (19) mindestens ein Heizkörper (27) vorgesehen ist, der in dem Vorlauf des zweiten Rohrkreises (25.2) vor den primären Luft-Wasser-Wärmetauscher (1) und vor den sekundären Wärmetauscher (22) geschaltet ist.

9. System bestehend aus einem Gebäude und einer Klimatisierungsanlage nach einem der vorhergehenden Ansprüche.

10. Verfahren zur Konditionierung von Luft in einem Nutzbereich (19) mit einer Klimatisierungsanlage nach einem der vorhergehenden Ansprüche 1 bis 8.

## Claims

1. An air-conditioning system for a building having multiple decentralized useable areas (19) for indirectly or directly heating, cooling, humidifying and dehumidifying air in all useable areas (19), having a central heat generator (18) and a central cold generator (17) for the central supply of all useable areas (19), in each case a secondary heat exchanger (22) for each decentralized useable area (19) for decentralized heating and cooling of the useable area (19), a hydraulic pipe system having a first pipe circuit (25.1) as a flow and return connection between the cold generator (17) and the secondary heat exchanger (22) and a second pipe circuit (25.2) as a flow and return connection between the heat generator (18) and the secondary heat exchanger (22),
**characterized in that**
a central ventilation unit (8) is connected to each useable area (19) via decentralized air ducts for supply air (21) and for exhaust air (21.1), the central ventilation unit (8) has a rotary heat and moisture exchanger (9.1) and a rotary heat exchanger (9.2), wherein the central supply air flow (6) in the ventilation unit (8) is exclusively passively conditionable by the central exhaust air flow (15) in the ventilation unit (8), wherein the central ventilation unit (8) has a regenerative heat exchanger (31) hydraulically coupled to the condenser of the cold generator (17) and the regenerative heat exchanger (31) is hydraulically coupled to a residual air heat exchanger (32), wherein the residual air heat exchanger (32) is hydraulically coupled to the heat generator (18), wherein the regenerative heat exchanger (31) is arranged in the air duct for exhaust air (21.1) upstream of the rotary heat and moisture exchanger (9.1) and downstream of the rotary heat exchanger (9.2), as a result of which the regenerative heat exchanger (31) warms an exhaust air flow (15) in accordance with the dehumidification load and, as a result, expels the humidity stored in the rotary heat and moisture exchanger (9.1).

2. The air-conditioning system according to Claim 1,
**characterized in that**
a primary air-to-water heat exchanger (1) is provided for each useable area (19), said primary air-to-water heat exchanger actively finally conditioning the passively preconditioned ambient air in the ventilation unit (8) in each case in the decentralized useable area (19), wherein the primary air-to-water heat exchanger (1) is hydraulically coupled both to the first pipe circuit (25.1) and to the second pipe circuit (25.2).

3. The air-conditioning system according to Claim 2,
**characterized in that**
the primary air-to-water heat exchanger (1) is hydraulically coupled both via the first pipe circuit (25.1) and via the second pipe circuit (25.2) and in series with the secondary heat exchanger (22).

4. The air-conditioning system according to any one of the preceding claims,
**characterized in that**
a central switching hydraulic system (25) is provided, which switchably connects the first pipe circuit (25.1) to the second pipe circuit (25.2) in such a manner that the hydraulic capacity of the first pipe circuit (25.1) is separatable, from the central switching hydraulic system (25) onwards, up to 100% from the cold generator (17) and is couplable up to 100% to the heat generator (18) or the hydraulic capacity of the second pipe circuit (25.2), from the central switching hydraulic system (25) onwards, is separatable up to 100% from the heat generator (18) and is couplable up to 100% to the cold generator (17).

5. The air-conditioning system according to Claim 4,
**characterized in that**
the through-flow direction in each of the two pipe circuits (25.1, 25.2) is reversible at least partially in the region between the central switching hydraulic system (25) and the respective useable area (19).

6. The air-conditioning system according to any one of Claims 2 to 5,
**characterized in that**
the primary air-to-water heat exchanger (1) and the secondary heat exchanger (22) is in each case controllable jointly via only one control valve (23) in the first pipe circuit (25.1) and in each case jointly via only one control valve (23) in the second pipe circuit (25.2).

7. The air-conditioning system according to any one of the preceding claims,
**characterized in that**
the rotary exchangers (9.1, 9.2) have angular housings, the flow cross-section of which is greater than the active round surface of a rotor (9.3) of the rotary exchangers (9.1, 9.2), and the flow passages (13) formed between the rotor (9.3) and the housing can be opened or closed by one or more motor-driven corner valves (11).

8. The air-conditioning system according to any one of the preceding claims,
**characterized in that**
at least one heater (27) is provided for each useable area (19), said heater being switched in the flow of the second pipe circuit (25.2) before the primary air-to-water heat exchanger (1) and before the secondary heat exchanger (22).

9. A system consisting of a building and an air-conditioning system according to any one of the preceding claims.

10. A method for conditioning air in a useable area (19) having an air-conditioning system according to any one of the preceding Claims 1 to 8.

## Revendications

1. Installation de climatisation destinée à un bâtiment avec plusieurs zones utiles décentralisées (19) en vue du chauffage, du rafraîchissement, de l'humidification et de la déshumidification directs ou indirects de l'air dans toutes les zones utiles (19), présentant un générateur de chaleur central (18) et un générateur de froid central (17) en vue de l'alimentation centralisée de toutes les zones utiles (19), respectivement un échangeur de chaleur secondaire (22) pour chaque zone utile décentralisée (19) en vue du chauffage et du rafraîchissement décentralisés de la zone utile (19), un système de tuyaux hydrauliques avec un premier circuit de tuyauterie (25.1) servant au raccordement d'alimentation et de retour entre le générateur de froid (17) et l'échangeur de chaleur secondaire (22) et avec un second circuit de tuyauterie (25.2) servant au raccordement d'alimentation et de retour entre le générateur de chaleur (18) et l'échangeur de chaleur secondaire (22),
**caractérisée en ce**
**qu'**un appareil de ventilation central (8) est relié à chaque zone utile (19) par des conduits d'air décentralisés pour l'air entrant (21) et l'air sortant (21.1), l'appareil de ventilation central (8) comporte un échangeur de chaleur et d'humidité rotatif (9.1) et un échangeur de chaleur rotatif (9.2), dans laquelle le flux d'air entrant central (6) à l'intérieur de l'appareil de ventilation (8) ne peut être conditionné que passivement par le flux d'air sortant central (15) à l'intérieur de l'appareil de ventilation (8), dans laquelle l'appareil de ventilation central (8) comporte un échangeur de chaleur à régénération (31) couplé au condenseur du générateur de froid (17) par voie hydraulique et l'échangeur de chaleur à régénération (31) est couplé à un échangeur de chaleur résiduelle (32) par voie hydraulique, dans laquelle l'échangeur de chaleur résiduelle (32) est couplé au générateur de chaleur (18) par voie hydraulique, dans laquelle l'échangeur de chaleur à régénération (31) est disposé dans le conduit de l'air entrant (21.1) en amont de l'échangeur de chaleur et d'humidité rotatif (9.1) et en aval de l'échangeur de chaleur rotatif (9.2), moyennant quoi l'échangeur de chaleur à régénération (31) réchauffe un flux d'air sortant (15) en fonction du besoin de déshumidification et moyennant quoi il chasse l'humidité stockée dans l'échangeur de chaleur et d'humidité rotatif (9.1).

2. Installation de climatisation selon la revendication 1,
**caractérisée en ce**
**qu'**un échangeur de chaleur eau-air primaire (1) est prévu pour chaque zone utile (19), qui soumet l'air ambiant préconditionné passivement dans l'appareil de ventilation (8) à un conditionnement final actif respectivement dans la zone utile décentralisée (19), dans laquelle l'échangeur de chaleur eau-air primaire (1) est couplé tant au premier circuit de tuyauterie (25.1) qu'au second circuit de tuyauterie (25.2) par voie hydraulique.

3. Installation de climatisation selon la revendication 2,
**caractérisée en ce**
**que** l'échangeur de chaleur eau-air primaire (1) est couplé à l'échangeur de chaleur secondaire (22) par voie hydraulique et en série tant par le premier circuit de tuyauterie (25.1) que par le second circuit de tuyauterie (25.2).

4. Installation de climatisation selon l'une quelconque des revendications précédentes,
**caractérisée en ce**
**qu'**un système hydraulique de commutation central (25) est prévu, qui raccorde le premier circuit de tuyauterie (25.1) au second circuit de tuyauterie (25.2) de façon commutable, de sorte que le premier circuit de tuyauterie (25.1) peut être séparé jusqu'à 100 % du générateur de froid (17) dans sa capacité hydraulique à partir du système hydraulique de commutation central (25) et peut être couplé jusqu'à 100 % au générateur de chaleur (18) ou que le second circuit de tuyauterie (25.2) peut être séparé jusqu'à 100 % du générateur de chaleur (18) dans sa capacité hydraulique à partir du système hydraulique de commutation central (25) et peut être couplé jusqu'à 100 % au générateur de froid (17).

5. Installation de climatisation selon la revendication 4,
**caractérisée en ce**
**que** le sens d'écoulement dans chacun des deux circuits de tuyauterie (25.1, 25.2) est au moins partiellement réversible dans la zone entre le système hydraulique de commutation central (25) et la zone utile respective (19).

6. Installation de climatisation selon l'une quelconque des revendications 2 à 5,
**caractérisée en ce**
**que** l'échangeur de chaleur eau-air primaire (1) et l'échangeur de chaleur secondaire (22) sont réglables respectivement en commun par une seule vanne de régulation (23) dans le premier circuit de tuyauterie (25.1) et respectivement en commun par une seule vanne de régulation (23) dans le second circuit de tuyauterie (25.2).

7. Installation de climatisation selon l'une quelconque des revendications précédentes,
**caractérisée en ce**
**que** les échangeurs rotatifs (9.1, 9.2) présentent des boîtiers carrés, dont la section de passage est plus grande que la surface ronde active d'un rotor (9.3) des échangeurs rotatifs (9.1, 9.2) et que les conduits d'écoulement (13) formés entre le rotor (9.3) et le boîtier peuvent être ouverts ou fermés par un ou plusieurs clapets d'équerre (11) actionnés par moteur.

8. Installation de climatisation selon l'une quelconque des revendications précédentes,
**caractérisée en ce**
**qu'**au moins un élément chauffant (27) est prévu pour chaque zone utile (19), qui est monté dans le conduit d'alimentation du second circuit de tuyauterie (25.2) en amont de l'échangeur de chaleur eau-air primaire (1) et en amont de l'échangeur de chaleur secondaire (22).

9. Système constitué d'un bâtiment et d'une installation de climatisation selon l'une quelconque des revendications précédentes.

10. Procédé de conditionnement de l'air dans une zone utile (19) avec une installation de climatisation selon l'une quelconque des revendications précédentes 1 à 8.
